Europäisches Patentamt

European Patent Office

Office européen des brevets

(19)

(11) Veröffentlichungsnummer: **0 098 597**
**A2**

# (12) EUROPÄISCHE PATENTANMELDUNG

(21) Anmeldenummer: 83106598.2

(22) Anmeldetag: 06.07.83

(51) Int. Cl.³: **F 16 K 19/00**

(30) Priorität: 09.07.82 DE 3225740

(43) Veröffentlichungstag der Anmeldung: **18.01.84**
**Patentblatt 84/3**

(84) Benannte Vertragsstaaten: **AT BE CH DE FR GB IT LI NL SE**

(71) Anmelder: **FRIEDRICH GROHE ARMATURENFABRIK GmbH & CO, Hauptstrasse 137, D-5870 Hemer (DE)**

(72) Erfinder: **Gnauert, Werner, Burggräfte 25, D-5860 Iserlohn (DE)**

(54) **Thermostatgeregeltes Mischventil.**

(57) Bei einem thermostatgeregelten Mischventil, insbesondere zum Bereiten von Warmwasser für Duschen, Badewannen od. dgl., ist, um ein unerwünschtes Überschwingen der Regeleinrichtung durch eine plötzliche Änderung der vorgebbaren Sollwerttemperatur zu verhindern, ein Verzögerungsglied zwischen der Temperaturvorwähleinrichtung und dem Thermostaten angeordnet.

0098597

Friedrich Grohe Armaturenfabrik GmbH & Co.
GRP - 512 EP

## Thermostatgeregeltes Mischventil

Die Erfindung bezieht sich auf ein thermostatgeregeltes Mischventil mit den im Oberbegriff des Anspruchs 1 angegebenen Merkmalen.
Mischventile dieser Gattung sind bekannt (DE-PS 11 75 953) und zeigen im allgemeinen ein gutes Regelverhalten. Es wurde jedoch festgestellt, daß bei einer Verstellung des Sollwerts von der Temperatur des zufließenden kalten Mediums auf ca. $40^{\circ}$ Celsius ein Überschwingen des Thermostats bis annähernd auf die Vorlauftemperatur des zufließenden warmen Mediums möglich ist, so daß in unerwünschter Weise das abgegebene gemischte Medium wesentlich über die Sollwerttemperatur hinausschwingen kann.

.../2

0098597

Als Ursache des Überschwingens wurde gefunden, daß bei einer Stelländerung der Temperaturvorwähleinrichtung bzw. Griffverdrehung in Richtung warm der Thermostat schlagartig entlastet wird und der Ventilkörper bzw. Regulierkegel gegen den Kaltwassersitz fährt und für einen gewissen Zeitraum nur warmes Medium in das Mischventil einströmen läßt.

Der Erfindung liegt die Aufgabe zugrunde, das eingangs aufgeführte Mischventil so auszubilden, daß ein Überschwingen weitgehend ausgeschaltet wird.
Diese Aufgabe wird erfindungsgemäß durch die im kennzeichnenden Teil des Anspruchs 1 angegebenen Merkmale gelöst. Weitere Ausgestaltungen der Erfindung sind in den Ansprüchen 2 bis 6 angegeben.

Die mit der Erfindung erzielten Vorteile bestehen insbesondere darin, daß bei einer Griffverstellung der Temperaturvorwähleinrichtung die erzeugte Stellgröße verzögert über einen bestimmten Zeitraum an den Thermostaten bzw. Regeleinrichtung weitergegeben wird und die Regeleinrichtung nicht unmittelbar einer Griffverstellung folgt.
Um insbesondere das unerwünschte Überschwingen in den Bereich oberhalb der Sollwerttemperatur (Verbrühungsgefahr) zu verhindern, kann zweckmäßig das erfindungsgemäße Verzögerungsglied so ausgelegt werden, daß es nur bei einer Erhöhung der Sollwerttemperatur in der Temperaturvorwähleinrichtung wirkt.
Vorteilhaft kann das Verzögerungsglied durch eine mit dem Medium gefüllte Kammer veränderlichen Volumens realisiert werden, wobei die durch die Volumenänderung hervorgerufene Strömung über einen hinreichend kleinen Drosselquerschnitt zu führen ist. Eine derartige Einrichtung kann zweckmäßig in der ohnehin erforderlichen stehenden Gewindespindel der Temperaturvorwähleinrichtung ausgebildet werden, so daß im Hinblick auf das Verzögerungselement so gut wie kein zusätzlicher Platzbedarf erforderlich ist.

Bei einem nur in einer Richtung wirkenden Verzögerungsglied wird zweckmäßig die mit Medium gefüllte Kammer durch ein Einwegventil entlastet, so daß die Drosselöffnungen nur in der bestimmten Stellrichtung zur Verhinderung eines Überschwingens in den Temperaturbereich oberhalb der Sollwerttemperatur zur Wirkung gelangen.

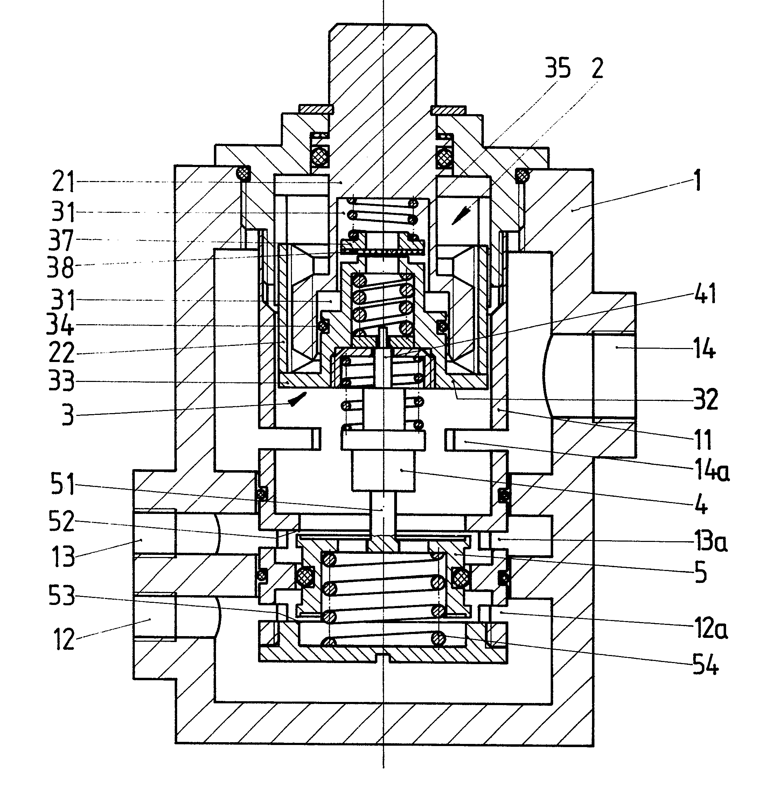

Ein Ausführungsbeispiel der Erfindung ist in der Zeichnung in schematischer Weise in Form eines Mischventils zum Bereiten von Warmwasser für Duschen etc. im Längsschnitt gezeigt und wird im folgenden näher beschrieben.

Das Mischventil ist in einer Rohrbuchse 11 als Baueinheit ausgebildet und in ein Gehäuse 1 mittels Gewinde gedichtet eingeschraubt. In dem Gehäuse 1 und entsprechend in der Rohrbuchse 11 sind Zulauföffnungen 12,12a für das warme Medium sowie 13,13a für das kalte Medium und Ablauföffnungen 14,14a für das gemischte Medium ausgebildet. In dem aus dem Gehäuse 1 vorspringenden Bereich der Rohrbuchse 11 ist eine Temperaturvorwähleinrichtung 2 ausgebildet, die mit einer Gewindespindel 21 aus der Rohrbuchse gedichtet herausgeführt ist und einen in der Zeichnung nicht dargestellten Drehgriff trägt zur Temperatursollwerteinstellung. Die Gewindespindel 21 ist mit einem unverdrehbar, jedoch axial verschiebbaren Stellring 22 in Verbindung, dessen innere Stirnseite die mit der Gewindespindel 21 erzeugte Stellgröße auf einen mit seinem Ringflansch 33 an der Stirnseite an dem Stellring 22 anliegenden Deckel 32 überträgt. Koaxial in dem Deckel 32 ist eine Aufnahme für einen Stößel 41 eines Thermostaten 4 vorgesehen. Der Thermostat 4 wird an der dem Stößel 41 gegenüberliegenden Stirnseite von einer Stange 51 eines zwischen den Ventilsitzen 52 für kaltes Medium und 53 für warmes Medium verschiebbaren Ventilkörper 5 mit Hilfe einer Rückstellfeder 54 gegen den Deckel 32 gestrammt.

Je nach der mit der Temperaturvorwähleinrichtung 2 bestimmten Stellgröße werden von dem Thermostaten 4 die Einlaßquerschnitte an den Ventilsitzen 52,53 so geregelt, daß ein gemischtes Medium mit der gewünschten Temperatur an der Ablauföffnung 14a austritt. Zur verzögerten Abgabe der von der Temperaturvorwähleinrichtung 2 erzeugten Stellgröße an den Thermostaten 4 ist ein Verzögerungsglied 3 zwischen Thermostat 4 und Stellring 22 geschaltet.
Das Verzögerungsglied 3 wird dabei im wesentlichen von einer in Form eines zylindrischen Raumes 31 in der ohnehin für die Erzeugung der Stellgröße erforderlichen Gewindespindel 21 ausgebildet, welcher durch den Deckel 32 an der zylindrischen Seitenwandung mit einem Dichtring 34 an seiner offenen Stirnseite verschlossen wird. Außerdem wird der Deckel 32 durch die Rückstellfeder 54 von dem Thermostaten 4 in den Raum 31 hineingestrammt, wobei der Ringflansch 33 des Deckels 32 an der vorspringenden Stirnseite des Stellrings 22 eine Ruheposition einnimmt. Wird nun mit der Temperaturvorwähleinrichtung die Gewindespindel 21 betätigt, so wird der Stellring 22 zwangsläufig axial verschoben, wodurch entsprechend auch der Deckel 32 in eine andere Lage verschoben wird, so daß der Raum 31 in der Gewindespindel 21 entsprechend der Stellbewegung vergrößert oder verkleinert wird. Wird nun dieser Raum 31 mit dem Medium, in diesem Falle Mischwasser, aufgefüllt und der Raum 31 mit Drosselöffnungen zu dem Mischwasserraum des Mischventils verbunden, so kann die erzeugte Stellgröße nur in einem von der Auslegung der Drosselöffnungen abhängigen Zeitraum an den Thermostaten 4 weitergegeben werden.

Bei dem Ausführungsbeispiel ist das Verzögerungsglied 3 darüber hinaus mit einem mittels Feder 35 verspannten Tellerventil 36 versehen, so daß das Verzögerungsglied lediglich bei einer vom Thermostaten 4 wegführenden Axialbewegung des Stellringes 22 in Wirkung tritt, d.h. wenn eine Erhöhung der Sollwerttemperatur mit der Gewindespindel 21 eingestellt wird. Bei einer Absenkung der Sollwerttemperatur, d.h. bei einer Axialbewegung des Stellrings 22 in Richtung auf den Thermostaten 4, wird das Tellerventil 36 von dem Flüssigkeitsdruck abgehoben, so daß eine unmittelbare Übergabe der Stellgröße auf den Thermostaten erfolgen kann. Das Tellerventil 36 ist dabei mit einem ringförmigen Ventilkörper 37 versehen, an dem eine geschlossene Dichtscheibe 38 aufgebracht ist. Die für die Verzögerungswirkung wesentlichen Drosselöffnungen sind dabei als eine oder mehrere Poren im Zentrum der Dichtscheibe 38 vorgesehen.

Neben dem Tellerventil 36 als Einwegventil können selbstverständlich auch anders ausgebildete, z.B. ein federbelastetes Kugelventil mit in dem Kugelventilsitz eingelassene Überströmkanäle als Drosselöffnungen eingesetzt werden.

0098597

Friedrich Grohe Armaturenfabrik GmbH & Co.
GRP - 512 EP

A N S P R Ü C H E

1. Thermostatgeregeltes Mischventil, insbesondere zum Bereiten von Warmwasser für Duschen, Badewannen od. dgl., mit einem wenigstens zwei Zulauföffnungen für das kalte und warme Medium sowie einer Ablauföffnung für das gemischte Medium aufweisenden Gehäuse, in welchem ein von einer Temperaturvorwähleinrichtung stellbarer Thermostat vorgesehen ist, der mit einem zwischen zwei Ventilsitzen für das kalte und warme Medium verschiebbaren Ventilkörper gekoppelt ist, dadurch gekennzeichnet, daß die Temperaturvorwähleinrichtung (2) über ein Verzögerungsglied (3) mit dem Thermostaten (4) gekoppelt ist.

...../7

0098597

2. Thermostatgeregeltes Mischventil nach Anspruch 1, dadurch gekennzeichnet, daß das Verzögerungsglied (3) nur bei einer Erhöhung der Sollwerttemperatur wirkt.

3. Thermostatgeregeltes Mischventil nach den Ansprüchen 1 oder 2, dadurch gekennzeichnet, daß als Verzögerungsglied (3) ein koaxial in einer stehenden Gewindespindel (21) der Temperaturvorwähleinrichtung (2) ausgebildeter, mit Medium gefüllter Raum (31) vorgesehen ist, welcher von einem in der Gewindespindel (21) gedichtet verschiebbaren, den Thermostaten (4) abstützenden buchsenförmigen Deckel (32) verschlossen ist, wobei der Raum (31) durch eine oder mehrere Drosselöffnungen mit dem gemischten Medium in dem Mischventil in Verbindung steht, und der Deckel (32) in der Ruhestellung mit einem Ringflansch (33) an einem von der Gewindespindel (21) verschiebbaren Stellring (22) anliegt.

4. Thermostatgeregeltes Mischventil nach Anspruch 3, dadurch gekennzeichnet, daß im Deckel (32) ein Einwegventil und eine oder mehrere Drosselöffnungen vorgesehen sind.

5. Thermostatgeregeltes Mischventil nach Anspruch 4, dadurch gekennzeichnet, daß als Einwegventil ein federbelastetes Kugelventil vorgesehen ist und als Drosselöffnungen ein oder mehrere in der Schließstellung offen verbleibende Kanäle in dem Kugelventilsitz eingelassen sind.

6. Thermostatgeregeltes Mischventil nach Anspruch 4, dadurch gekennzeichnet, daß als Einwegventil ein federbelastetes Tellerventil (36) mit einer eine Durchgangsöffnung abdeckenden Dichtscheibe (38) vorgesehen ist, wobei im Bereich der Durchgangsöffnung in der Dichtscheibe (38) eine oder mehrere Poren als Drosselöffnungen ausgebildet sind.